# EUROPÄISCHE PATENTANMELDUNG

(11) **EP 1 160 725 A2**
(43) Veröffentlichungstag der Anmeldung: **05.12.2001**
(21) Anmeldenummer: 01109802.7
(22) Anmeldetag: 20.04.2001
(51) Int. Cl.: G06T 1/00

(54) **Bildaufnehmer und Bildaufnahmeverfahren, insbesondere zur dreidimensionalen Erfassung von Objekten oder Szenen**

(30) Priorität: 09.05.2000 DE 10022454
(71) Anmelder: DaimlerChrysler AG, 70567 Stuttgart (DE)
(72) Erfinder: Riedel, Helmut, Dr., 82256 Fürstenfeldbruck (DE)
(74) Vertreter: Kolb, Georg

(57) **Zusammenfassung**

Ein Bildaufnehmer zur dreidimensionalen Erfassung von Objekten oder Szenen umfasst eine Detektoreinheit (20), die eine Vielzahl von photoempfindlichen Pixelelementen (21) aufweist. Damit werden Signale erzeugt, die Informationen über einzelne Bildpunkte enthalten, wie z.B. Helligkeit und Entfernung. Ein Signalausgang (35) dient zur Ausgabe der Bildinformationen. Die zur Bildinformation beitragenden Pixelelemente (21) sind in ihrer Anordnung an zu erwartende Positionen charakteristischer Bildelemente angepasst oder anpassbar oder unregelmäßig angeordnet. Die Pixelelemente (21) können fest installiert sein, oder es können aus einem Array von Pixelelementen durch Programmierung einzelne Pixelelemente aktiviert oder deaktiviert werden, um eine beispielsweise V-förmige Interesseregion hinsichtlich des aufzunehmenden Bildes auszubilden.

## Beschreibung

Die Erfindung betrifft einen Bildaufnehmer gemäß dem Oberbegriff von Patentanspruch 1 und ein Bildaufnahmeverfahren gemäß dem Oberbegriff von Patentanspruch 14. Der Bildaufnehmer und das Bildaufnahmeverfahren sind insbesondere zur dreidimensionalen Erfassung von Objekten oder Szenen geeignet.

Bildaufnehmer mit einer Vielzahl von Photodetektoren werden in vielen Bereichen der Technik angewendet, beispielsweise in der Fernerkundung, bei der Überwachung von Räumen oder in der Konsumgüterindustrie. Dreidimensionale Meßsysteme, die zur Aufnahme von 3-D Entfernungsbildern geeignet sind, dienen z.B. zur optischen Formerfassung von Gegenständen oder Oberflächen, wobei Informationen über die Entfernung einzelner Bildpunkte in dem aufgenommenen Bild mitenthalten sind.

Ein Anwendungsbereich von großer praktischer Bedeutung ist die schnelle 3D-Formerfassung beliebiger Oberflächen im Bereich zwischen 20 cm und 50 Meter Entfernung. Insbesondere bei der Navigation, der Bewegungskontrolle und der schnellen 3D-Vermessung großer Konturen ist eine hohe Geschwindigkeit bei der Aufnahme und Verarbeitung der Bildinformationen notwendig.

Bekannte Ansätze zur Aufnahme von dreidimensionalen Entfernungsbildern sind z.B. Radar- oder Laser-Radar-Systeme. Diese sind jedoch aufwendig in der Herstellung und verursachen hohe Kosten. Eine weitere Möglichkeit bieten Silizium-Bildaufnehmer, die in einer Entfernungsbildkamera verwendet werden. Dabei wird zwar eine hohe Bildauflösung nach VGA-Norm mit z.B. 640 x 480 Pixeln erreicht, jedoch ist die Analyse aufgenommener Szenen auch bei hohen Rechenleistungen mit einem erheblichen Zeitaufwand verbunden.

Als alternative Silizium-Bildsensoren für 3-D Entfernungsbilder sind Photonic Mixer Devices (PMD) bekannt. Derartige Photonic Mixer Devices oder Photomischdetektoren sind in der DE 197 04 496 A1 beschrieben. Um die Phasen- und/oder Amplitudeninformation einer elektromagnetischen Welle zu erfassen, hat ein Pixel eines photonischen Mischelementes mindestens zwei lichtempfindliche Modulationsphotogates und zugeordnete Akkumulationsgates. An die Modulationsphotogates werden Gatespannungen angelegt, während an die Akkumulationsgates eine Gleichspannung angelegt wird, wobei die in der Raumladungszone der Modulationsphotogates von einer einfallenden elektromagnetischen Welle erzeugten Ladungsträger in Abhängigkeit von der Polarität der Gatespannungen dem Potentialgefälle eines Driftfeldes ausgesetzt werden und zum entsprechenden Akkumulationsgate driften.

Bei einem Vortrag auf der DGZfP-GMA-Fachtagung in Langen am 28./29. April 1997 wurden unter dem Titel "Schnelle und einfache optische Formerfassung mit einem neuartigen Korrelations-Photodetektor-Array", R. Schwarte et. al., ebenfalls Photomischdetektoren bzw. PMD's beschrieben. In dem zugehörigen Vortragspapier ist u.a. ein 1D-PMD-Laserradar mit einem PMD-Pixel gezeigt, bei dem der Abstand eines Zielpunkts in einer 3D-Szene über eine Phasenauswertung einer elektromagnetischen Welle bzw. über die Phasenlaufzeit bestimmt wird.

Bei den bekannten Geräten und Verfahren zur dreidimensionalen Bildaufnahme besteht jedoch das Problem, dass insbesondere bei der Aufnahme einer komplexen Szene ein sehr hoher Rechenaufwand erforderlich ist, ebenso wie eine aufwendige Elektronik. Dadurch wird die schnelle Informationsgewinnung aufgrund der benötigten Zeit beeinträchtigt. Eine schnelle dreidimensionale Mustererkennung ist nicht oder nur mit großen
Einschränkungen oder mit einem unverhältnismäßig großen Aufwand und hohen Kosten möglich.

Es ist daher die Aufgabe der vorliegenden Erfindung, einen Bildaufnehmer zu schaffen und ein Bildaufnahmeverfahren bereitzustellen, womit komplexe Szenen auch dreidimensional mit erhöhter Geschwindigkeit erfasst werden können, ohne dass ein hoher Aufwand erforderlich ist.

Diese Aufgabe wird gelöst, durch den Bildaufnehmer gemäß Patentanspruch 1 und durch das Bildaufnahmeverfahren gemäß Patentanspruch 14. Weitere vorteilhafte Merkmale, Aspekte und Details der Erfindung ergeben sich aus den abhängigen Ansprüchen, der Beschreibung und den Zeichnungen.

Der erfindungsgemäße Bildaufnehmer ist insbesondere zur dreidimensionalen Erfassung von Objekten oder Szenen geeignet und umfasst eine Detektoreinheit, die eine Vielzahl von photoempfindlichen Pixelelementen aufweist, um Signale zu erzeugen, die Informationen über einzelne Bildpunkte erhalten, und einen Signalausgang, dem die Signale der Pixelelemente zugeführt werden, zur Ausgabe von Bildinformationen, wobei die zur Bildinformation beitragenden Pixelelemente unregelmäßig angeordnet sind, oder in ihrer Anordnung an zu erwartende Positionen charakteristischer Bildelemente angepasst oder anpassbar sind.

Mit dem erfindungsgemäßen Bildaufnehmer bzw. 3-D Bildsensor kann eine hohe Verarbeitungsgeschwindigkeit und insbesondere auch eine schnelle 3-D Mustererkennung erfolgen. Durch eine minimierte Pixelanzahl, die beispielsweise auf eine vorgegebene Anordnung beschränkt ist, können besonders kostengünstige 3D Bildsensoren geschaffen werden. Die Pixelanordnung ist somit z.B. angepasst an eine aufzunehmende Szene, so dass mit nur wenigen Pixeln die Abbildung der charakteristischen Szenenmerkmale erfasst werden kann.

Vorteilhafterweise sind die Pixelelemente direkt adressierbar. Auch können die Pixelelemente sequentiell oder wahlfrei adressierbar sein. Bei einer sequentiellen Adressierung der einzelnen Pixel, z.B. über Schieberegister, kann die gesamte Bildinformation als sequentieller Datenstrom verfügbar gemacht werden.

Die Adressierung der Pixelelemente ist z.B. wählbar, oder sie kann in einer vorbestimmten Reihenfolge erfolgen.

Beispielsweise können die zur Bildinformation beitragenden Pixelelemente geometrisch, z.B. V-förmig oder kreuzförmig, angeordnet sein. Sie können aber auch in einer Zeile angeordnet sein, beispielsweise mit unregelmäßigen gegenseitigen Abständen.

Insbesondere kann dabei in sogenannten Regions of Interest (ROI) eine höhere Pixeldichte als in weniger interessanten Bereichen vorgesehen sein.

Vorteilhafterweise sind die Pixelelemente programmierbar, so dass aus einer Vielzahl von Pixelelementen ausgewählte Pixelelemente aktiviert und/oder deaktiviert werden können. in diesem Fall sind nicht nur eine geringe Anzahl von Pixelelementen im Detektor enthalten, sondern es werden aus einer Zeilen- und/oder Zeilenanordnung von Pixeln nur bestimmte Pixelelemente aktiviert, um die notwendigen Bildinformationen zu erfassen. Durch den Verzicht auf die Aufnahme und Verarbeitung unwichtiger Bildinformationen wird die Bildverarbeitungsgeschwindigkeit erhöht.

Bevorzugt sind programmierbare Elemente zur Auswahl der Pixelelemente vorgesehen. Vorteilhafterweise dienen entsprechende Schalter zur Überbrückung von einzelnen Pixeln und/oder zum Unterbrechen von Adressleitungen. Es können z.B. EPROM-Bausteine vorgesehen sein, oder auch schmelzbare elektrische Verbindungen, mit denen einzelne Pixelelemente permanent aktiviert oder deaktiviert werden können.

Vorzugsweise umfasst der Bildaufnehmer einen Zeilendecoder und/oder einen Spaltendecoder zur Adressierung der programmierbaren Elemente. Insbesondere dient ein Schieberegister zur Auslesung der zur Bildinformation beitragenden oder ausgewählten Pixelelemente.

Bevorzugt sind ein oder mehrere Videoleitungen vorgesehen, die zur Ausgabe der Signale der Pixelelemente dienen. In dem erfindungsgemäßen Bildaufnehmer befinden sich vorteilhafterweise Photonic Mixer Devices bzw. Photomischdetektoren, mit denen dreidimensionale Entfernungsbilder erfasst werden können.

Bei dem erfindungsgemäßen Bildaufnahmeverfahren, insbesondere zur dreidimensionalen Erfassung von Objekten oder Szenen, werden mittels photoempfindlicher Pixelelemente Signale erzeugt, die Informationen über einzelne Bildpunkte enthalten, und anschließend als Bildinformationen bereitgestellt, wobei die bereitgestellten Signale Bildpunkten entsprechen, die in ihrer Anordnung an zu erwartende Positionen charakteristischer Bildelemente angepasst sind, oder die unregelmäßig angeordnet sind. Mit dem Verfahren können Verarbeitungsgeschwindigkeiten erhöht werden, so dass mit einer minimierten Anzahl von Detektorelementen Messaufgaben unter bekannten Szenen-Randbedingungen erfüllt werden können. Die Bildverarbeitungsaufgaben werden dadurch wesentlich erleichtert. Insbesondere sind die Pixel an die erwartete Szene und/oder an die zur Bildverarbeitung verwendeten Algorithmen angepasst.

Bei einer festen Anordnung von einer reduzierten Anzahl von Pixelelementen, beispielsweise unregelmäßig oder in verschiedenen geometrischen Formen, können zudem erhebliche Kosten eingespart werden. Die Datenmengen für die weitere Bildverarbeitung werden möglichst gering gehalten. Dabei wird z.B. Vorwissen über die zu analysierenden Szenen verwendet, um Detektorbausteine optimal zu konfigurieren.

Bei dem Bildaufnahmeverfahren erfolgt die Adressierung der Pixelelemente vorteilhafterweise sequentiell oder wahlfrei. Auch kann die Reihenfolge der Adressierung der Pixelelemente anwendungsspezifisch gewählt werden.

Beispielsweise ist eine Adressierung der Pixelelemente im Zeilensprung möglich, oder sie erfolgt zeilenweise mäandrierend.

Vorteilhafterweise werden die Pixelelemente programmiert, um ausgewählte Pixelelemente zu aktivieren und/oder zu deaktivieren. Dadurch können z.B. gezielt entsprechend unterschiedlichen Anforderungen Pixelelemente aktiviert bzw. ausgewählt werden.

Vorteilhafterweise wird während der Aufnahme eine dynamische Reprogrammierung der Pixelelemente durchgeführt. Dadurch ist es möglich, bei der Aufnahme eine Anpassung an wechselnde Szenen zu erreichen, wobei dennoch die Datenverarbeitungsgeschwindigkeit erhöht wird, ohne dass entscheidende Informationen verloren gehen.

Nachfolgend wird die Erfindung beispielhaft anhand der Figuren beschrieben. Es zeigen:
- Fig. 1: eine PMD-Detektorzeile mit unregelmäßiger Pixelanordnung, als erste bevorzugte Ausführungsform der Erfindung;
- Fig. 2: ein PMD-Detektorarray mit einer V-förmigen Interesseregion bzw. Region of Interest (ROI) als eine weitere Ausführungsform der Erfindung;
- Fig. 3: ein PMD-Detektorarray mit einer kreuzförmigen Interesseregion gemäß einer noch weiteren Ausführungsform der Erfindung;
- Fig. 4: ein PMD-Array mit wahlfreier Adressierung;
- Fig. 5: ein PMD-Array mit sequentieller Adressierung;
- Fig. 6: eine PMD-Detektorzeile mit Pixelprogrammierung gemäß einer anderen bevorzugten Ausführungsform der Erfindung;
- Fig. 7: die Architektur eines PMD-Arrays mit programmierbaren Pixeln;
- Fig. 8: eine Array-Auslesung im Zeilensprungverfahren; und
- Fig. 9: eine Array-Auslesung, die zeilenweise mäandrierend erfolgt.

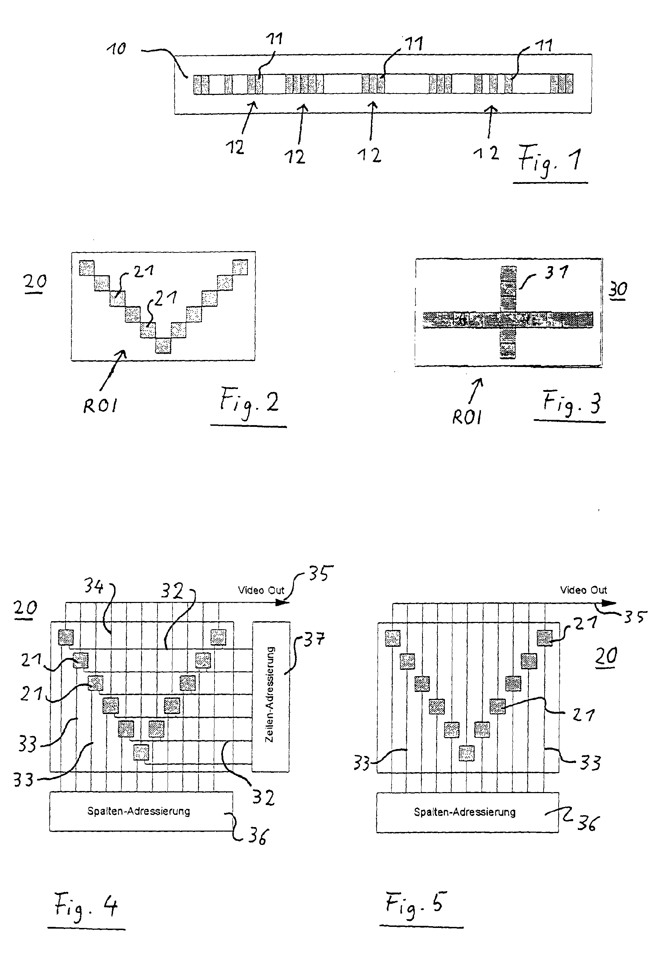

In Figur 1 ist schematisch eine Detektorzeile 10 gezeigt. Sie enthält Pixelelemente 11 bzw. Pixel oder Bildaufnahmepunkte, die unregelmäßig angeordnet sind. Dabei sind einige Pixelelemente direkt benachbart, während andere Pixelelemente einen räumlichen Abstand zwischen sich aufweisen. Die Abstände zwischen den Pixelelementen 11 sind unterschiedlich groß, so dass sogenannte Interesseregionen 12 gebildet werden, die eine höhere Pixeldichte aufweisen, als weniger interessante Bereiche. Dabei ist die Anordnung der Pixelelemente 11 mit den Interesseregionen 12 an die zu erwartende Szene, die mit dem Bildaufnehmer aufgenommen werden soll, angepasst.

In dem erfindungsgemäßen Bildaufnehmer sind die Pixelelemente 11 bzw. die Detektorzeile 10 in der Fokalebene frei wählbar angeordnet, so dass der Bildaufnehmer an die Messaufgabe des Meßsystems angepasst ist, um dreidimensionale Objekte oder Bilder bzw. Szenen zu erfassen.

Die Detektorzeile 10 kann z.B. in der Produktion bzw. Fertigung verwendet werden, um den Aufenthalt von Werkstücken zu bestimmen. Bei vorgegebenen Aufenthaltsorten ist die Bildaufnahme und Bilddatenverarbeitung auf diejenigen Bereiche beschränkt, in denen Werkstücke im Bild anzutreffen sind, während die anderen Bereiche keine Ressourcen oder Rechenzeit beanspruchen.

In Figur 2 ist eine Detektoranordnung 20 gezeigt. Dabei sind Pixelelemente 21 in ihrer Gesamtheit V-förmig angeordnet, so dass sie einen V-förmigen Interessebereich (ROI) bilden. Die V-förmigen Vorzugslinien der Pixelelemente 21 als ROI sind insbesondere für die Precrash Sensorik in der Fahrzeugtechnik geeignet. Dabei wird vom Fahrzeug ausgehend nach vorne ein V-förmiger Bildausschnitt erfasst, der mit einer so hohen Geschwindigkeit bearbeitet wird, dass Gefahrensituationen rechtzeitig automatisch erkannt werden und entsprechende automatische Funktionen, wie Warn- oder Steuerungsfunktionen, ausführbar sind.

Figur 3 zeigt eine Detektoranordnung 30 mit kreuzförmig angeordneten Pixelelementen 31. Diese Array-Anordnung hat eine horizontale und eine vertikale Linie als Interessebereich bzw. ROI. Ein derartiger Bildaufnehmer ist beispielsweise in einem Fahrzeug angeordnet, um Hindernisse auf Straßen vorzugsweise mit der horizontalen Linie aus Pixelelementen 31 zu erkennen. Vertikale Hindernisse, beispielsweise beschränkte Durchfahrtshöhen in Garageneinfahrten oder Tunnels, werden durch die vertikale Linie als ROI erkannt. Auch hier ist die Anzahl und die Anordnung der Pixelelemente 31 an die Messaufgabe bzw. an die erwartete Szene angepasst, so dass Hindernisse schnell und mit kostengünstigen Bildaufnehmern erkannt werden können. Auch Trackingaufgaben bzw. Spurverfolgungsmaßnahmen lassen sich mit dem erfindungsgemäßen Bildaufnehmer schnell und kostengünstig realisieren.

Die Adressierung der einzelnen Pixel bzw. Pixelelemente 11, 21, 31 erfolgt z.B. direkt mit individuellen Signalausgängen.

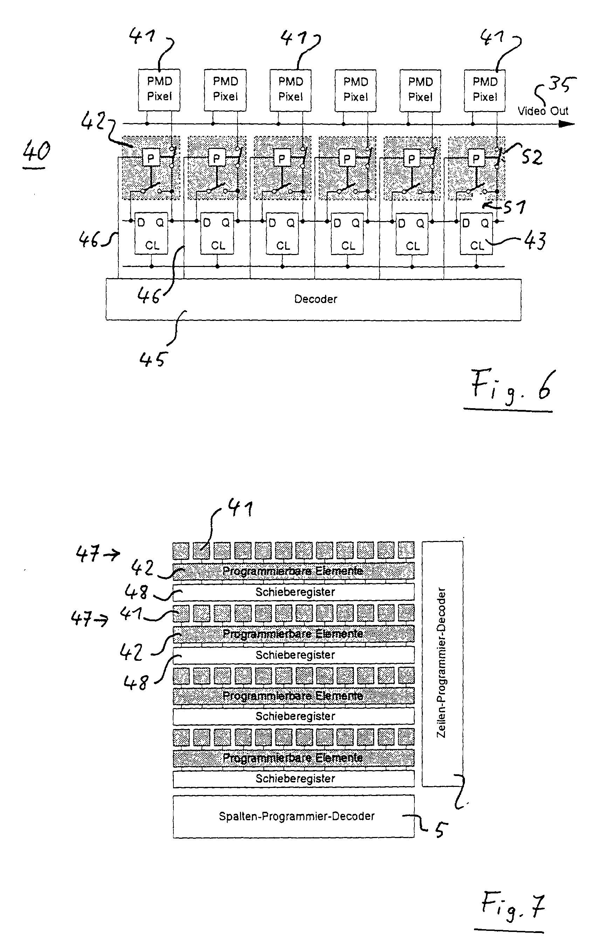

Figur 4 zeigt die Detektoranordnung 20 mit V-förmiger ROI und wahlfreier Adressierung. Durch eine Matrix von horizontalen Adressierleitungen 32 und vertikalen Adressierleitungen 33 werden die Pixelelemente 21 individuell bzw. einzeln angesteuert. Von jedem Pixelelement 21 geht eine Pixelelement-Ausgangsleitung 34 zu einem Videosignalausgang 35. Eine Spalten-Adressiereinheit 36 ist durch die vertikalen Adressierleitungen 33 mit den einzelnen Pixelelementen 21 verbunden. Eine Zeilen-Adressiereinheit 37 ist durch die horizontalen Adressierleitungen 32 mit den einzelnen Pixelelementen 21 verbunden.

Bei der in Figur 5 dargestellten Detektoranordnung 20 mit V-förmiger ROI erfolgt die Adressierung der Pixelelemente 21 sequentiell mit Hilfe von Schieberegistern. Dabei ist die Reihenfolge der Pixel z.B. anwendungsspezifisch festgelegt. Hier ist lediglich eine Spalten-Adressiereinheit 36 vorgesehen, die mit den Pixelelementen 21 durch jeweils eine Adressierleitung 33 verbunden ist. Im Betrieb werden die erzeugten Pixelsignale auf einer oder auf mehreren Videoleitungen aus dem 3D-Entfernungsbildaufnehmer herausgeführt. In der Figur ist der Videosignalausgang 35 schematisch dargestellt.

Die Pixelelemente 11, 21, 31 sind Photonic Mixer Devices, wie sie in der Eingangs erwähnten DE 197 04 496 A1 ausführlich beschrieben sind, auf deren Inhalt hier ausdrücklich Bezug genommen wird. Hinsichtlich der konkreten Ausgestaltung der Pixelelemente 11, 21, 31 wird weiterhin auf die Eingangs erwähnte Schrift zum genannten Vortrag hingewiesen. Die Pixelelemente 21 von Figur 4 werden mit Multiplexern adressiert.

Figur 6 zeigt eine Detektorzeile 40 mit programmierbaren PMD-Pixelelementen 41. Ein Schieberegister mit Schieberegisterstufen 43 dient als Adressierungseinheit für die einzelnen Pixel bzw. Pixelelemente 41. Durch programmierbare Elemente 42, von denen jeweils eines in jedem Pixelelement 41 enthalten ist bzw. diesem zugeordnet oder daran gekoppelt ist, können die Flip-Flop Stufen des Schieberegisters individuell überbrückt werden.

Die programmierbaren Elemente 42 enthalten jeweils einen Schalter S1, der in geschlossenem Zustand die zugehörige Flip-Flop Stufe bzw. Schieberegisterstufe 43 überbrückt. Somit wird das zugehörige Pixel, das der Schieberegisterstufe 43 zugeordnet ist, in diesem Zustand des Schalters S1 nicht adressiert und in der seriellen Signalauslese übersprungen.

Ein weiterer Schalter S2 in dem programmierbaren Element 42 stellt den Kontakt zum zugehörigen Pixelelement 41 her. Im geöffneten Zustand des Schalters S2 ist somit das Pixelelement 41 zusätzlich von der Schieberegisterstufe 43 getrennt.

Das zu einem programmierbaren Element 42 zugehörige Pixelelement 41 ist somit bei geschlossenem Schalter S1 und geöffnetem Schalter S2 deaktiviert, und bei offenem Schalter S 1 und geschlossenem Schalter S2 aktiviert. Auf diese Weise kann aus der gesamten Detektorzeile 40 eine beliebige Auswahl von Pixeln bzw. Pixelelementen 41 getroffen werden. Die Adressierung der programmierbaren Elemente 42 lässt sich in einfacher Weise über einen Decoderbaustein realisieren.

Die Realisierung solcher Schalter erfolgt z.B. in CMOS-Technologie mit Hilfe von wenigen Transistoren. Die Programmierung der Schalterstellung, d.h. das Einstellen der Potentiale an den Gates der Schaltertransistoren, wird beispielsweise über EPROM-Bausteine vorgenommen, welche ebenfalls auf dem Bildaufnehmer angeordnet sind. Möglich ist aber auch die Verwendung von sogenannten Fusable Links, die eine permanente Schalterstellung bei der Programmierung verursachen. Beide Möglichkeiten können in den programmierbaren Elementen 42 ausgeführt sein.

Bei der Programmierung der programmierbaren Elemente 42 werden ein oder mehrere Pixelelemente 41 von der Adressierung ausgeschlossen, indem, wie oben erwähnt, durch den Schalter S1 der Eingang D und der Ausgang Q der Schieberegisterstufe 43 überbrückt wird. Zusätzlich wird bei der Programmierung über den oben genannten Schalter S2 die vom Anschluss Q der Schieberegisterstufe 43 zum Pixelelement 41 führende Adressleitung unterbrochen.

Eine Decodereinheit 45 ist durch Adressleitungen 46 mit jedem der programmierbaren Elemente 42 verbunden, um diese zu adressieren.

Bei der Verwendung von EEPROM-Bausteinen zur Realisierung des Bildaufnehmers bzw. Detektorbausteins kann die Auswahl der Pixel bzw. Pixelelemente 41 während des Detektorbetriebs auch dynamisch verändert werden. Hierdurch wird eine dynamische Anpassung des Bildaufnehmers an variierende Szenenbedingungen ermöglicht.

Figur 7 zeigt eine zweidimensionale Array-Anordnung von Pixelelementen 41, die durch die programmierbaren Elemente 42 auswählbar bzw. aktivierbar oder deaktivierbar sind. Dabei wird jeder Pixelzeile 47 des Arrays ein horizontales Schieberegister 48 zugeordnet. Ein Zeilendecoder 50 und ein Spaltendecoder 51 dienen zur Adressierung der programmierbaren Elemente 42. Nach der Programmierung werden nur noch die ausgewählten Pixel in einem seriellen Datenstrom auf einer oder mehreren Videoleitungen ausgelesen.

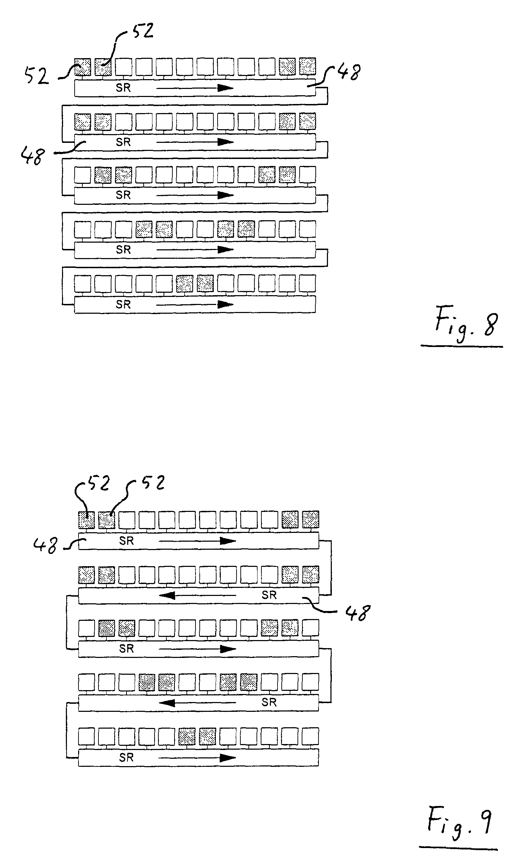

Figur 8 zeigt schematisch die Array-Auslese im Zeilensprungverfahren. Dabei erfolgt die Auslesung stets in der gleichen Richtung. In dem hier dargestellten Array von Pixelelementen sind ausgewählte Pixelelemente 52 durch Programmierung aktiviert, so dass sich eine V-förmige aktive Pixelanordnung ergibt.

Figur 9 zeigt eine Array-Auslese, die zeilenweise mäandrierend erfolgt. Dabei alterniert die Ausleserichtung zeilenweise, so dass nach Durchlaufen eines Schieberegisters 48, das darauffolgende Schieberegister in entgegengesetzter Richtung durchlaufen wird. Auch hier sind ausgewählte Pixelelemente 52 aktiviert, entsprechend einer voreingestellten Interesseregion ROI.

In den Figuren 8 und 9 sind die ausgewählten Pixelelemente 52 dunkel dargestellt, so dass die V-förmige Region of Interest auf dem Bildaufnehmer erkennbar ist. Die Anzahl der Videoleitungen kann an die Anforderungen der Anwendung angepasst werden. Im Regelfall wird die Videoleitung für die differenzielle Auslese der PMD-Signale als Zweileitersystem ausgeführt sein.

Zusammengefasst schafft die Erfindung einen 3-D Entfernungsbildaufnehmer, insbesondere nach dem PMD-Prinzip, wobei eine Detektorzeile oder ein Detektorarray mit programmierbaren Pixeln ausgestattet sein kann, und wobei die anwendungsspezifische Pixelauswahl insbesondere durch Programmierung erfolgt und eine wahlfreie Programmierung der Pixel möglich ist. Weiterhin ist eine dynamische Reprogrammierung der Pixel während des Detektorbetriebs möglich, ebenso wie eine zeilenweise Adressierung eines zweidimensionalen Arrays von Pixelelementen durch Schieberegister. Die Adressierung kann im Zeilensprung oder zeilenweise mäandrierend erfolgen, und die Detektorsignale sind über eine oder mehrere Videoleitungen aus dem 3D-Entfernungsbildaufnehmer herausgeführt.

Die Detektorzeile oder das Detektorarray kann, je nach den Erfordernissen des jeweiligen Anwendungsfalls, eine anwendungsspezifische, unregelmäßige PMD-Pixelanordnung aufweisen. Die Pixeladressierung kann sequentiell oder wahlfrei erfolgen, wobei bei sequentieller Adressierung die Reihenfolge der Pixel anwendungsspezifisch gewählt werden kann.

Insgesamt ermöglicht die Erfindung die Aufnahme von 3-D Entfernungsbildern mit Hilfe eines Silizium-Bildaufnehmers, bei dem die Position der Bildpunkte in der Fokalebene an die Positionen charakteristischer Merkmale innerhalb der aufzunehmenden Szene angepasst sind. Somit kann mit einer geringen Anzahl von Bildpunkten eine komplexe Szene mit bekannten Merkmalen in Echtzeit analysiert werden. Die hierzu erforderlichen Bildaufnehmer sind einfach und kostengünstig. Anstatt Pixel einer Detektorzeile oder eines Detektorarrays regelmäßig und flächendeckend mit hoher Dichte anzuordnen, sind in der vorliegenden Erfindung nur wenige Pixelelemente zur Erfassung der charakteristischen Szenenmerkmale vorgesehen, wobei die wenigen Pixelelemente entweder fest angeordnet sein können, oder durch entsprechende Programmierung eine Aktivierung bzw. Deaktivierung einzelner Pixel aus einer großen Menge von Pixeln erfolgen kann. Durch Schieberegister erfolgt ein besonders schnelles, sequentielles Bildausleseverfahren. Durch dynamische Reprogrammierung der Pixel während des Detektorbetriebs ist eine flexible Pixelauswahl möglich. Vor allem ermöglicht die Erfindung eine schnelle 3-D Mustererkennung durch szenenangepasste Pixelanordnung.

Mit dem erfindungsgemäßen Entfernungsbildaufnehmer kann z.B. in Kraftfahrzeugen die Kopfposition der Insassen bestimmt werden, um bei einem Airbag die auszustoßende Gasmenge individuell an die Kopfposition anzupassen und damit die Verletzungsgefahr zu mindern. Weiterhin ist eine Out-of-Position-Sensorik möglich, wobei eine Kamera den Fahrer und den Beifahrer beobachtet, um die Position zu bestimmen.

Eine weitere Anwendungsmöglichkeit bietet die Precrash Sensorik, wobei durch den Entfernungsbildaufnehmer automatisch sehr schnell erfasst wird, ob Personen bzw. Gegenstände in der Nähe des Fahrzeugs vorhanden sind, um anschließend in die Fahrzeugfunktionen einzugreifen, beispielsweise durch Bremsen, oder durch Auslösen einer Warnfunktion.

Insbesondere eignet sich der erfindungsgemäße Entfernungsbildaufnehmer und das Verfahren zur Hinderniserkennung, beispielsweise im Stop and Go Verkehr, wobei das vorausfahrende Fahrzeug beobachtet wird und bei Erreichen eines minimalen Abstands, der z.B. vom jeweiligen Fahrzustand abhängig ist, eine Bremsung erfolgt.

Auch kann die vorliegende Erfindung Bestandteil eines Innenraumüberwachungssystems sein, beispielsweise um eine Zustandsänderung im Fahrzeug zu erkennen und einen Alarm auszulösen. Hierbei kann mit nur wenigen Bildelementen auf kostengünstige Weise eine Überwachung des Fahrzeuginnenraums erfolgen, insbesondere zur Diebstahlsicherung. Weiterhin sind die verschiedensten Anwendungen möglich, beispielsweise in der Automatisierung, der Fertigungstechnologie, und in anderen Bereichen.

## Patentansprüche

1. Bildaufnehmer, insbesondere zur dreidimensionalen Erfassung von Objekten oder Szenen, mit
einer Detektoreinheit (10;20; 30; 40), die eine Vielzahl von photoempfindlichen Pixelelementen (21; 31; 41; 52) umfasst, zur Erzeugung von Signalen, die Informationen über einzelne Bildpunkte enthalten, und
einem Signalausgang (34, 35), dem die Signale der Pixelelemente (21; 31; 41; 52) zugeführt werden, zur Ausgabe von Bildinformationen,
**dadurch gekennzeichnet, dass**
die zur Bildinformation beitragenden Pixelelemente (21; 31; 41; 52) unregelmäßig angeordnet sind, und/oder in ihrer Anordnung an zu erwartende Positionen charakteristischer Bildelemente angepasst oder anpassbar sind.

2. Bildaufnehmer nach Anspruch 1, **dadurch gekennzeichnet, dass** die Pixelelemente (21; 31; 41; 52) direkt adressierbar sind

3. Bildaufnehmer nach Anspruch 1 oder 2, **dadurch gekennzeichnet, dass** die Pixelelemente (21; 31; 41; 52) sequentiell oder wahlfrei adressierbar sind

4. Bildaufnehmer nach einem der vorhergehenden Ansprüche, **dadurch gekennzeichnet, dass** die Adressierung der Pixelelemente (21; 31; 41; 52) in einer vorbestimmten Reihenfolge erfolgt oder wählbar ist.

5. Bildaufnehmer nach einem der vorhergehenden Ansprüche, **dadurch gekennzeichnet, dass** die zur Bildinformation beitragenden Pixelelemente (21) V-förmig oder kreuzförmig angeordnet sind.

6. Bildaufnehmer nach einem der vorhergehenden Ansprüche, **dadurch gekennzeichnet, dass** die Pixelelemente (41) programmierbar sind, um ausgewählte Pixelelemente (41) zu aktivieren oder zu deaktivieren.

7. Bildaufnehmer nach einem der vorhergehenden Ansprüche, **gekennzeichnet durch** programmierbare Elemente (42) zur Auswahl von Pixelelementen (41).

8. Bildaufnehmer nach einem der vorhergehenden Ansprüche, **gekennzeichnet durch** Schalter zur Überbrückung von Pixeln und/oder zum Unterbrechen von Adressleitungen.

9. Bildaufnehmer nach einem der vorhergehenden Ansprüche, **gekennzeichnet durch** schmelzbare elektrische Verbindungen zur permanenten Aktivierung oder Deaktivierung einzelner Pixelelemente (21; 31; 41; 52).

10. Bildaufnehmer nach einem der Ansprüche 7 bis 9, **gekennzeichnet durch** einen Zeilendecoder (50) und/oder einen Spaltendecoder (51), zur Adressierung der programmierbaren Elemente (42).

11. Bildaufnehmer nach einem der vorhergehenden Ansprüche, **gekennzeichnet durch** ein Schieberegister (48) zur Auslesung der zur Bildinformation beitragenden oder ausgewählten Pixelelemente (41).

12. Bildaufnehmer nach einem der vorhergehenden Ansprüche, **gekennzeichnet durch** ein oder mehrere Videoleitungen (35) zur Ausgabe der Signale der Pixelelemente (21; 31; 41; 52).

13. Bildaufnehmer nach einem der vorhergehenden Ansprüche, **gekennzeichnet durch** Photonic Mixer Devices zur Erfassung dreidimensionaler Entfernungsbilder.

14. Bildaufnahmeverfahren, insbesondere zur dreidimensionalen Erfassung von Objekten oder Szenen, bei dem mittels photoempfindlicher Pixelelemente (21; 31; 41; 52) Signale erzeugt werden, die Informationen über einzelne Bildpunkte enthalten,
und anschließend die Signale als Bildinformationen bereitgestellt werden,
**dadurch gekennzeichnet, dass**
die bereitgestellten Signale Bildpunkten entsprechen, die in ihrer Anordnung an zu erwartende Positionen charakteristischer Bildelemente angepasst sind, und/oder die unregelmäßig angeordnet sind.

15. Bildaufnahmeverfahren nach Anspruch 14, **dadurch gekennzeichnet, dass** die Adressierung der Pixelelemente (21; 31; 41; 52) sequentiell oder wahlfrei erfolgt.

16. Bildaufnahmeverfahren nach Anspruch 14 oder 15, **dadurch gekennzeichnet, dass** die bei der Adressierung der Pixelelemente (21; 31; 41; 52) die Reihenfolge anwendungsspezifisch gewählt wird.

17. Bildaufnahmeverfahren nach einem der Ansprüche 14 bis 16, **dadurch gekennzeichnet, dass** eine Adressierung der Pixelelemente (21; 31; 41; 52) im Zeilensprung oder zeilenweise mäandrierend erfolgt

18. Bildaufnahmeverfahren nach einem der Ansprüche 14 bis 17, **dadurch gekennzeichnet, dass** die Pixelelemente (41) programmiert werden, um ausgewählte Pixelelemente (41) zu aktivieren und/oder zu deaktivieren.

19. Bildaufnahmeverfahren nach einem der Ansprüche 14 bis 18, **dadurch gekennzeichnet, dass** während der Aufnahme eine dynamische Reprogrammierung der Pixelelemente (41) durchgeführt wird.
